# DEMANDE DE BREVET EUROPEEN

(11) **EP 0 556 161 A1**
(43) Date de publication de la demande: **18.08.1993**
(21) Numéro de dépôt: 93810087.2
(22) Date de dépôt: 11.02.1993
(51) Int. Cl.: B60F 1/04, E01B 37/00

(54) **Dispositif roulant pour voies ferrées**

(30) Priorité: 14.02.1992 CH 447/92
(71) Demandeur: Cicin-Sain, Ivo, CH-1030 Bussigny (CH)
(72) Inventeur: Cicin-Sain, Ivo, CH-1030 Bussigny (CH)
(74) Mandataire: Ganguillet, Cyril

(57) **Abrégé**

Le dispositif est destiné à être monté sur un engin de chantier (30) muni de moyens de déplacement propres (33, 34). Il comporte deux essieux (5, 5') munis de roues ferroviaires (4) et agencées pour circuler sur les rails d'une voie ferrée. Les essieux peuvent occuper une position relevée lorsque l'engin circule sur ses moyens de déplacement propres et une position abaissée lorsque l'engin doit circuler sur les rails d'une voie ferrée. Le dispositif comporte une plateforme (16, 16') montée en pivotement sur le châssis de l'engin de chantier, ladite plateforme étant destinée à recevoir un outil ou tout autre organe de travail.

## Description

La présente invention concerne un dispositif roulant pour voies ferrées.

On connaît de nombreux types de trains de poses et de renouvellement de voies ferrées. Ces trains sont de conception très complexe et fort coûteux. Ils sont par conséquent utilisés pour la pose de nouvelles voies ferrées ou pour la réfection de tronçons importants de voies ferrées existantes.

Par contre, lorsqu'il s'agit de réparer une voie ferrée sur une courte distance, par exemple suite à un accident ou pour toute autre raison, l'utilisation de tels trains est exclue. Dans ce cas, il est courant d'utiliser des engins de chantier, tels que par exemple des chargeuses à bras articulé, à l'extrémité duquel on fixe un outil. Or, il n'est pas toujours facile de faire circuler des engins de chantier traditionnels à proximité ou le long d'une voie ferrée. C'est pourquoi, il a déjà été proposé de munir ces engins de chantier d'essieux supplémentaires destinés à circuler sur les rails. Ces essieux supplémentaires sont généralement montés sur le châssis de l'engin de chantier par l'intermédiaire de vérins, de façon que l'on puisse les positionner en position relevée lorsque l'engin doit circuler sur la route ou le terrain et qu'ils puissent être abaissés lorsque l'engin doit circuler sur la voie ferrée, les roues propres de l'engin de chantier ne touchant alors plus le sol. Munis de ces essieux abaissables, les engins de chantier tels que les chargeuses munies d'un bras articulé et/ou téléscopique peuvent ainsi facilement circuler sur la voie ferrée.

Cette solution présente toutefois plusieurs inconvénients. En particulier, la fixation d'un outil de travail à l'extrémité du bras articulé n'est pas pratique. D'une part, il peut être dangereux de manipuler le bras lorsque l'engin se trouve sur la voie, à cause des fils électriques, poteaux, signalisation, appareils de voies, etc.. D'autre part, le conducteur de l'engin, qui se trouve dans la cabine de l'engin, est situé relativement loin de l'outil. Le travail qu'il doit effectuer avec l'outil est de ce fait rendu difficile, puisqu'il s'effectue hors de son contrôle visuel. D'autre part, lorsque c'est une unité de bourrage qui est montée à l'extrémité du bras de la chargeuse, du fait de l'éloignement des outils de bourrage de l'essieu d'appui de la chargeuse, il est possible que la voie se déforme à l'endroit du bourrage (bosse) sous l'effet du serrage qui intervient sous la traverse.

Un véhicule adaptable rail-route est décrit dans le brevet GB-A-2052406. Il s'agit d'un camion spécialement agencé pour le bourrage des voies ferrées, muni d'un dispositif de bourrage fixé à demeure à l'arrière du véhicule. Ce camion est uniquement dédié à cette fonction. Il n'est pas prévu de pouvoir modifier ou de remplacer son outillage.

Le but de la présente invention est de remédier aux inconvénients que présentent le travail sur une voie ferrée à l'aide d'engins de chantier courants, sans renoncer à l'utilisation desdits engins de chantier.

A cet effet, l'invention concerne un dispositif roulant roulant pour voies ferrées destiné à être monté sur un engin de chantier muni de moyens de déplacement propres, le dispositif comprenant deux essieux munis de roues ferroviaires et agencés pour circuler sur les rails d'une voie ferrée, lesdits essieux pouvant occuper une position relevée lorsque l'engin circule sur ses moyens de déplacement propres et une position abaissée lorsque l'engin doit circuler sur les rails d'une voie ferrée, les moyens de déplacement propres de l'engin se trouvant alors surélevés, tel que défini à la revendication 1. D'autres caractéristiques importantes de l'invention sont énoncées dans les revendications subordonnées à la revendication 1.

Un des avantages du dispositif de l'invention est de faire travailler l'outil sous le contrôle visuel rapproché du conducteur de l'engin de chantier. Un autre avantage réside en ce qu'il n'est plus nécessaire d'utiliser le bras articulé pendant le travail de l'outil.

D'autres avantages du dispositif de l'invention ressortiront de la description qui suit, donnée à titre d'exemple, et qui se réfère au dessin sur lequel:
- la figure 1 est une vue d'ensemble en élévation latérale d'une chargeuse de chantier munie d'un exemple de dispositif selon l'invention,
- la figure 2 est une vue de détail en élévation latérale de la plateforme roulante avant du dispositif de la figure 1,
- la figure 3 est une vue partielle, partiellement en coupe, depuis l'avant selon la flèche A, de la plateforme de la figure 1,
- la figure 4 est une vue partielle, partiellement en coupe, depuis l'arrière, de la plateforme roulante arrière du dispositif de la figure 1,
- la figure 5 est une vue depuis dessus du dispositif d'outillage avant monté sur la chargeuse de la figure 1, et

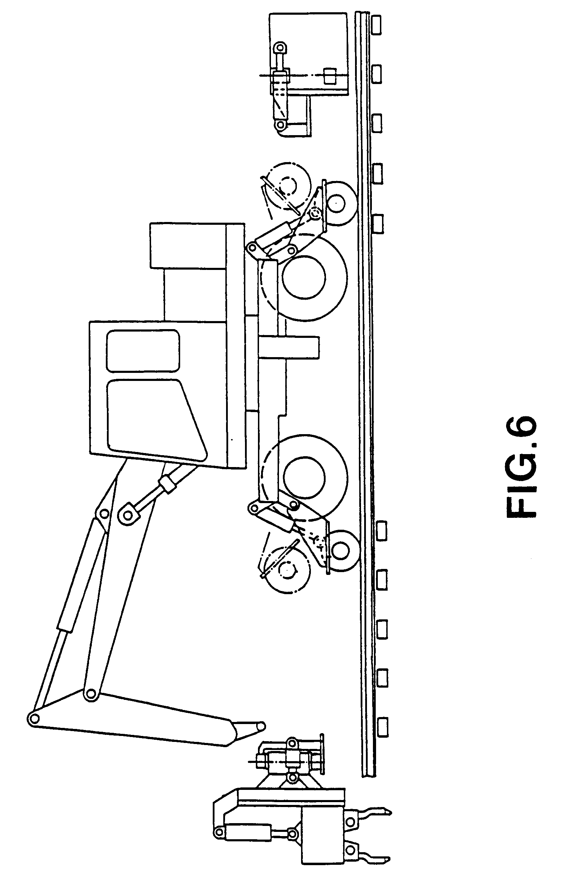

- la figure 6 est une vue d'ensemble en élévation latérale de la chargeuse de la figure 1, les outils avant et arrière ayant été déposés.

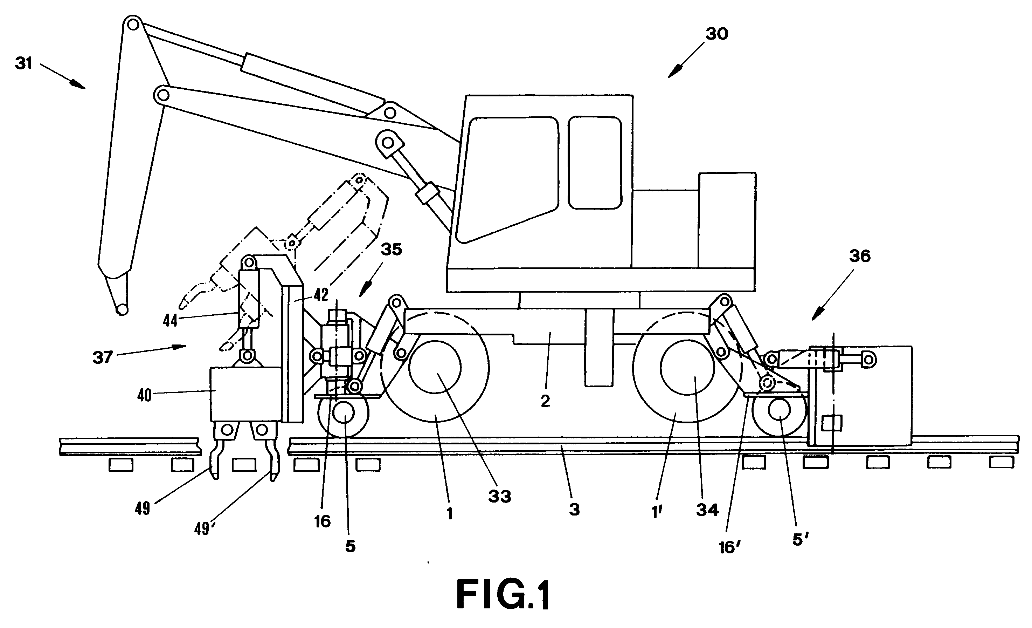

Le dispositif roulant représenté à la figure 1 est monté sur le châssis 2 d'une chargeuse 30 à bras articulés 31, ledit châssis étant monté sur deux essieux 33 et 34, munis de roues 1, 1'. Le dispositif roulant comprend deux parties 35, 36, fixées sur le châssis 2 de la chargeuse, disposées respectivement à l'avant et à l'arrière de celui-ci, entre les roues 1 de la chargeuse. Chacune de ces parties comprend une plateforme 16, 16' destinée à recevoir un outil ou tout autre organe de travail.

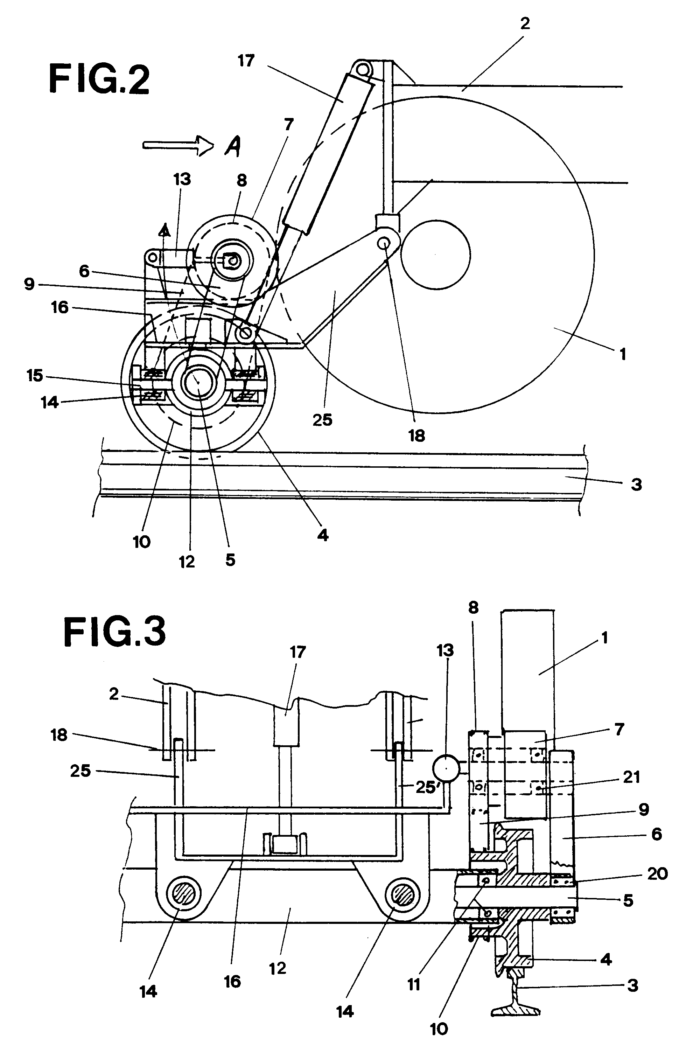

Comme représenté sur les figures 2 et 3 la fixation de la plateforme avant sur le châssis est réalisée d'une part par deux bras 25, 25' solidaires de la plateforme, disposés de part et d'autre de la plateforme et montés à leurs extrémités sur le châssis 2 de la chargeuse, de façon à pouvoir pivoter autour d'un axe transversal horizontal 18. La plateforme 16 est d'autre part reliée au châssis de la chargeuse par un vérin 17, monté en pivotement à l'une de ses extrémités sur la plateforme 16 et en pivotement à son autre extrémité sur le châssis 2 de la chargeuse. Ce vérin a pour fonction de permettre de relever ou d'abaisser la plateforme.

Un corps suspendu transversal non-oscillant 12 est suspendu sous la plateforme par l'intermédiaire de deux suspensions élastiques 14. Ce corps suspendu est de forme tubulaire et il est traversé de part en part par un essieu 5 monté à l'intérieur du corps suspendu par l'intermédiaire de deux roulements 11. A chacune des extrémités de l'essieu sont montées des roues ferroviaires 4, destinées à venir s'appuyer sur les rails 3. Le chiffre 15 représente l'axe de liaison entre le corps suspendu et la plateforme 16. L'entraînement de la roue ferroviaire 4 s'effectue par l'intermédiaire d'une roue d'entraînement 7 qui vient s'appuyer sur la roue motrice 1 de la chargeuse sous l'action d'un vérin d'appui 13. La roue 7 entraîne la roue ferroviaire 4 par l'intermédiaire de deux roues dentées 8 et 10 solidaires respectivement de la roue d'entraînement 7 et de la roue ferroviaire 4, une chaîne 9 reliant les deux roues dentées 8 et 10. A cet effet, la roue d'entraînement 7 est montée sur un bras de support 6 par l'intermédiaire d'un roulement 21, le bras 6 étant monté d'autre part sur la roue ferroviaire 4 par l'intermédiaire d'un roulement 20.

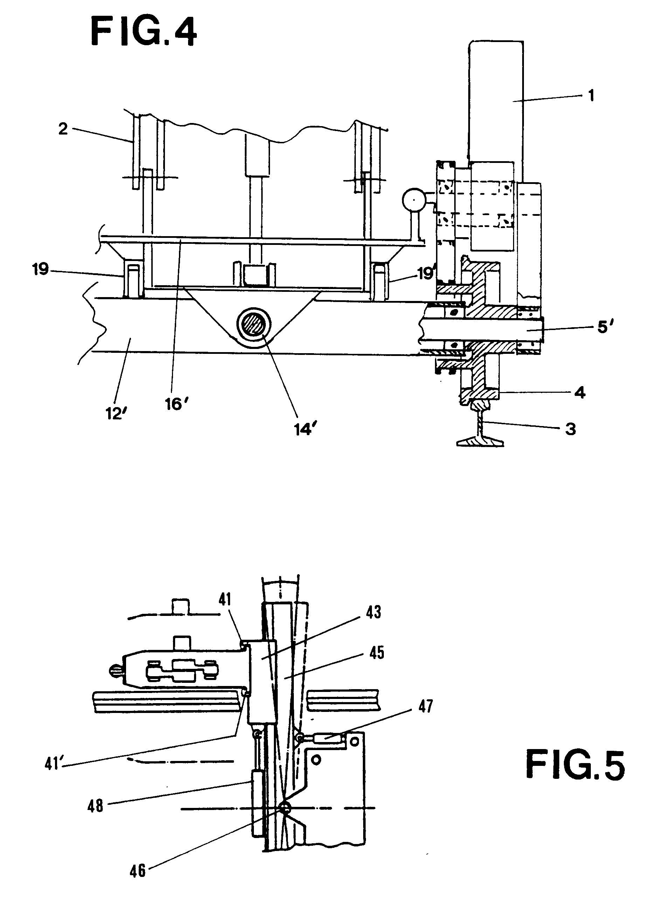

Comme représenté aux figures 1 et 5, le cadre support d'outils 40 peut être agencé de façon à coopérer en coulissement avec deux glissières verticales 41, 41' fixées sur un support 42, 43. Le déplacement vertical du cadre support d'outils s'effectue sous l'action d'un vérin 44. Le support 42, 43 est agencé de façon à pouvoir être déplacé latéralement, le long d'un tube transversal 45. A cet effet, la partie horizontale 43 du support et le tube transversal 45 sont munis d'organes respectifs agencés pour coopérer entre eux par coulissement. Le déplacement transversal du support 42, 43 est commandé par un vérin 48 solidaire du tube 45 et positionné horizontalement.

Le tube transversal 45 est monté sur la plateforme 16. Il est agencé de façon à pouvoir pivoter horizontalement autour d'un axe vertical 46, disposé à l'axe de la plateforme. Le mouvement de pivotement du tube 45 s'effectue sous l'action d'un vérin horizontal 47 s'appuyant sur la plateforme et positionné longitudinalement.

Tel que décrit ci-dessus, le dispositif de bourrage permet donc de faire subir à l'unité de bourrage un mouvement à trois composantes: un mouvement vertical le long des glissières 41, 41' sous l'action du vérin 44, un mouvement horizontal transversal le long du tube 45, sous l'action du vérin 48, et un mouvement de rotation par la rotation du tube transversal 45 autour de l'axe vertical 46 sous l'action du vérin 47.

Le dispositif de l'invention peut donc être parfaitement adapté au bourrage des voies de chemins de fer dans les zones d'aiguillage, et en particulier sous des traverses inclinées par rapport à l'axe de la voie. Cette utilisation n'est toutefois pas limitative, le dispositif de l'invention pouvant tout aussi bien être utilisé en ligne le long de la voie.

La partie du dispositif disposée à l'arrière de la chargeuse, représentée à la figure 4, est de conception très similaire à la partie du dispositif située à l'avant. Elle en diffère toutefois par le mode de suspension du corps suspendu 12', qui est un corps suspendu oscillant, suspendu à la plateforme 16' par une seule suspension élastique 14'.

Le dispositif est en outre muni de butées hydrauliques 19, 19' disposées de part et d'autre de la plateforme arrière 16' et destinées au blocage d'oscillation pendant que les outils travaillent, lorsque la chargeuse ne se déplace pas.

La réalisation du dispositif muni d'un corps suspendu oscillant à l'arrière et d'un corps suspendu non-oscillant à l'avant permet de suivre le gauchissement de la voie.

La plateforme 16 peut être agencée de façon à recevoir toutes sortes d'organes de travail, par exemple pour le brossage, le régalage, et notamment, comme représenté à la figure 1, pour recevoir une unité de bourrage 37 pour le bourrage du ballast sous les traverses. Cette unité de bourrage est montée sur la plateforme de façon à pouvoir pivoter autour d'un axe horizontal ou autour d'un axe vertical. Sur la figure 1, l'unité de bourrage est représentée en traits pleins lorsqu'elle est en position de travail et en traits mixtes lorsqu'elle est en position relevée.

Le bras de la chargeuse peut avantageusement être utilisé pour le montage de l'organe de travail sur la plateforme 16, 16' ou pour tout changement d'outil ou d'organe de travail.

Chacune des parties avant et arrière du dispositif décrit ci-dessus comprend une plateforme destinée à recevoir un outil ou tout autre organe de travail. Bien entendu, selon une variante, le dispositif peut être réalisé de façon que seule l'une des parties avant ou arrière comporte une telle plateforme. Il peut être monté non seulement sur une chargeuse, mais également sur tout autre engin de chantier.

## Revendications

1. Dispositif roulant pour voies ferrées destiné à être monté sur un engin de chantier (30) muni de moyens de déplacement propres (33, 34), le dispositif comprenant deux essieux (5, 5') munis de roues ferroviaires (4) et agencés pour circuler sur les rails d'une voie ferrée, lesdits essieux pouvant occuper une position relevée lorsque l'engin circule sur ses moyens de déplacement propres et une position abaissée lorsque l'engin doit circuler sur les rails d'une voie ferrée, les moyens de déplacement propres de l'engin se trouvant alors surélevés, caractérisé en ce qu'il comporte au moins un dispositif (16, 16') destiné à recevoir un outil ou tout autre organe de travail (37) et comportant des moyens permettant un montage amovible dudit outil.

2. Dispositif selon la revendication 1, l'engin de chantier comportant un châssis (2), caractérisé en ce que le dispositif destiné à recevoir un outil ou tout autre organe de travail comporte une plateforme (16, 16') montée en pivotement sur ledit châssis.

3. Dispositif selon la revendication 2, caractérisé en ce que l'un des essieux (5, 5') est monté en suspension sur la plateforme (16, 16') par l'intermédiaire d'au moins un organe de suspension (14, 14').

4. Dispositif selon l'une des revendications 2 ou 3, caractérisé en ce qu'il comprend au moins un vérin (17) monté entre le châssis (2) et la plateforme (16, 16') et agencé pour permettre de relever ou abaisser la plateforme.

5. Dispositif selon l'une des revendications précédentes, caractérisé en ce qu'il comporte un dispositif d'entraînement des roues ferroviaires (4) par les moyens de déplacement propres (34, 35) de l'engin de chantier.

6. Dispositif selon la revendication 5, l'engin de chantier comportant des roues motrices (1, 1'), caractérisé en ce qu'il comporte une roue d'entraînement (7) qui vient s'appuyer sur ladite roue motrice (1) sous l'action d'un moyen d'appui (13).

7. Dispositif selon la revendication 6, caractérisé en ce que ladite roue d'entraînement (7) entraîne la roue ferroviaire (4) par l'intermédiaire de deux roues dentées (8 et 10) solidaires respectivement de la roue d'entraînement (7) et de la roue ferroviaire (4), une chaîne (9) reliant les deux roues dentées (8 et 10), la roue d'entraînement (7) étant montée sur un bras de support (6), ledit bras étant monté d'autre part sur l'axe de la roue ferroviaire (4).

8. Dispositif selon l'une des revendications précédentes, caractérisé en ce que le dispositif (16) destiné à recevoir un outil ou tout autre organe de travail est disposé à l'une des extrémités de l'engin de chantier et en ce qu'il comporte un second dispositif (16') destiné à recevoir un outil ou tout autre organe de travail diposé à la seconde extrémité de l'engin de chantier.

9. Dispositif selon la revendication 8, caractérisé en ce que l'un des essieux (5) est monté en suspension non-oscillante sur le premier dispositif (16) destiné à recevoir un outil ou tout autre organe de travail par l'intermédiaire de deux organes de suspension (14) et en ce que le second essieu (5') est monté en suspension oscillante sur le second dispositif (16') destiné à recevoir un outil ou tout autre organe de travail par l'intermédiaire d'un seul organe de suspension (14').

10. Dispositif selon l'une des revendications précédentes, caractérisé en ce qu'il comprend au moins une unité de bourrage (37) comportant au moins une paire d'outils de bourrage (49, 49') montés en opposition sur un suport d'outils (40) mobile en hauteur, lesdits outils étant munis d'un dispositif de génération de vibrations et un dispositif de serrage des outils, l'unité de bourrage étant montée en coulissement vertical sur un support (42, 43) pouvant se déplacer latéralement, ledit support étant monté de façon à pouvoir se déplacer sur un élément transversal (45) pivotant autour d'un axe vertical (47).

11. Engin de chantier muni d'un dispositif roulant selon l'une des revendications 1 à 10.
